# EUROPÄISCHE PATENTSCHRIFT

(11) **EP 1 519 138 B1**
(45) Veröffentlichungstag und Bekanntmachung des Hinweises auf die Patenterteilung: **28.07.2010**
(21) Anmeldenummer: 04011488.6
(22) Anmeldetag: 14.05.2004
(51) Int. Cl.: G01B 5/012, B23Q 35/24, G08C 17/00, G01B 7/012, G08C 23/04

(54) **Tastkopf**
Touch probe
Sonde de contact

(30) Priorität: 26.09.2003 DE 10344865
(43) Veröffentlichungstag der Anmeldung: 30.03.2005
(73) Patentinhaber: Dr. Johannes Heidenhain GmbH, 83292 Traunreut (DE)
(72) Erfinder: Schopf, Reinhold, 83308 Trostberg (DE)

(56) Entgegenhaltungen:
- WO-A-01/67033
- DE-A1- 3 422 180
- DE-C2- 10 009 942
- DE-U1- 20 004 972
- US-A- 6 115 927

## Beschreibung

Die Erfindung betrifft einen Tastkopf mit Sendeelementen, durch die eine drahtlose Datenübertragung zu einem stationären Teil eines Tastsystems ermöglicht wird, gemäß dem Oberbegriff des Anspruches 1.

Ein Tastsystem umfasst in der Regel einen mobilen Tastkopf und ein stationäres Teil. Der Tastkopf in Form eines Tastschalters bzw. eines schaltenden Tasters mit einem auslenkbaren Tastelement, insbesondere einem Taststift, der bei einer Auslenkung aus seiner Ruheposition ein Schaltsignal abgibt, wird insbesondere zur Positionsbestimmung von Werkstücken verwendet, die in materialbearbeitenden Maschinen, beispielsweise Werkzeugmaschinen, eingespannt sind. Unter der Ruheposition des Taststiftes wird dabei eine Position verstanden, in welcher der Taststift keinen Kontakt mit dem anzutastenden Werkstück hat. Bei einem Kontakt des Taststiftes mit dem Werkstück wird der Taststift aus seiner Ruheposition ausgelenkt und es wird mittels eines geeigneten Wandlers ein elektrisches Signal erzeugt, wenn die Auslenkung eine vorgegebene Tastschwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

In diesem stationären Teil werden dann die Infrarot-Signale wieder in elektrische Signale umgewandelt. Das stationäre Teil des Tastsystems ist mit einer Ausweerteinheit verbunden, zu der die elektrischen Signale weitergeleitet und ausgewertet werden und schließlich beispielsweise zur Steuerung der Werkzeugmaschine bereitgestellt werden.

Aus den Dokumenten DE 3422180 A1 und WO 01/67033 A1 sind Tastsysteme der eingangs genannten Art bekannt, bei denen am Umfang eines den Taststift tragenden Tastkopfes eine Mehrzahl lichtemittierender Dioden angeordnet sind, die ein beim Auslenken des Taststiftes erzeugtes Schaltsignal als Sender berührungs- und kabellos zu einem außerhalb des Tastkopfes angeordneten stationärem Teil senden. Die Anordnung einer Mehrzahl lichtemittierender Dioden entlang des Umfangs des Tastkopfes ist hierbei erforderlich, damit auch bei einer Änderung der Position des Tastkopfes innerhalb des Bearbeitungsraumes einer Werkzeugmaschine gewährleistet ist, dass die Infrarot-Signale von zumindest einem Sendeelement das stationäre Teil des Tastsystems mit ausreichender Intensität erreichen. Moderne Werkzeugmaschinen ermöglichen häufig auch eine Schwenkbewegung um eine Achse senkrecht zur Längsachse des Tastkopfes. Wenn eine derartige Schwenkbewegung bei einer Anordnung gemäß dem Stand der Technik durchgeführt wird, können sich die Lichtkegel, die von den lichtemittierender Dioden ausgehen aus dem Empfangsbereich des stationären Teils heraus bewegen, so dass eine Übertragung von Signalen nicht mehr möglich ist.

Die bislang bekannten Ausführungen von Tastsystemen haben also den Nachteil, dass durch die Bewegung des Tastkopfes Stellungen erreicht werden können, in denen keine Signalübertragung mehr möglich ist, oder dass die Signalübertragung nur mit einer erhöhten Anzahl von stationären Teilen zuverlässig durchführbar ist.

Der Erfindung liegt daher die Aufgabe zugrunde, einen Tastkopf der eingangs genannten Art zu schaffen, welcher die genannten Nachteile vermeidet, und insbesondere eine kostengünstige Herstellung erlaubt.

Diese Aufgabe wird erfindungsgemäß durch die Merkmale des Anspruches 1 gelöst.

Der Erfindung liegt der Gedanke zu Grunde, dass von den Sendeelementen jeweils gerichtetes Infrarot-Licht mit einem Kernstrahl der eine Richtungskomponente parallel zur Längsachse des Tastkopfes aufweist, emittierbar ist, wobei die Kernstrahlen von zwei zueinander benachbarten Sendeelementen bezüglich der Längsachse unterschiedliche Abstrahlwinkel aufweisen und die Kernstrahlen von zwei nicht unmittelbar benachbarten Sendeelementen bezüglich der Längsachse gleiche Abstrahlwinkel aufweisen. Auf diese Weise können mit wenigen stationären Teilen, bzw. Empfängerteilen, in allen Stellungen des Tastkopfes Infrarot-Signale zwischen dem Tastkopf und einem oder ggf. mehreren stationären Teilen ausgetauscht werden.

Mit Vqrteil wird eine geradzahlige Anzahl von Sendeelementen über den Umfang am Tastkopf angeordnet, beispielsweise mindestens vier, mit Vorteil mindestens sechs.

Als Längsachse des Tastkopfes ist eine Achse zu verstehen, die parallel zur Richtung der größten Außenabmessungen, also zur Länge, des Tastkopfes verläuft.

In einer bevorzugten Ausgestaltung der Erfindung sind alle Sendelemente, welche am Umfang des Tastkopfes angeordnet sind weitgehend baugleich, wobei lediglich durch die Einbaulage der Sendeelemente der jeweilige Abstrahlwinkel der Kernstrahlen vorgebbar ist.

Vorteilhafte Ausbildungen der Erfindung entnimmt man den abhängigen Ansprüchen.

Weitere Einzelheiten und Vorteile des erfindungsgemäßen Tastkopfes ergeben sich aus der nachfolgenden Beschreibung eines Ausführungsbeispieles anhand der beiliegenden Figuren.

Es zeigen die
- Figur 1: einen Tastkopf mit einem stationärem Teil in einer Seitenansicht,
- Figur 2: den Tastkopf in einer Ansicht von unten (Z-Z),
- Figur 3: zwei baugleiche Sendelemente in unterschiedlicher Einbaulage.

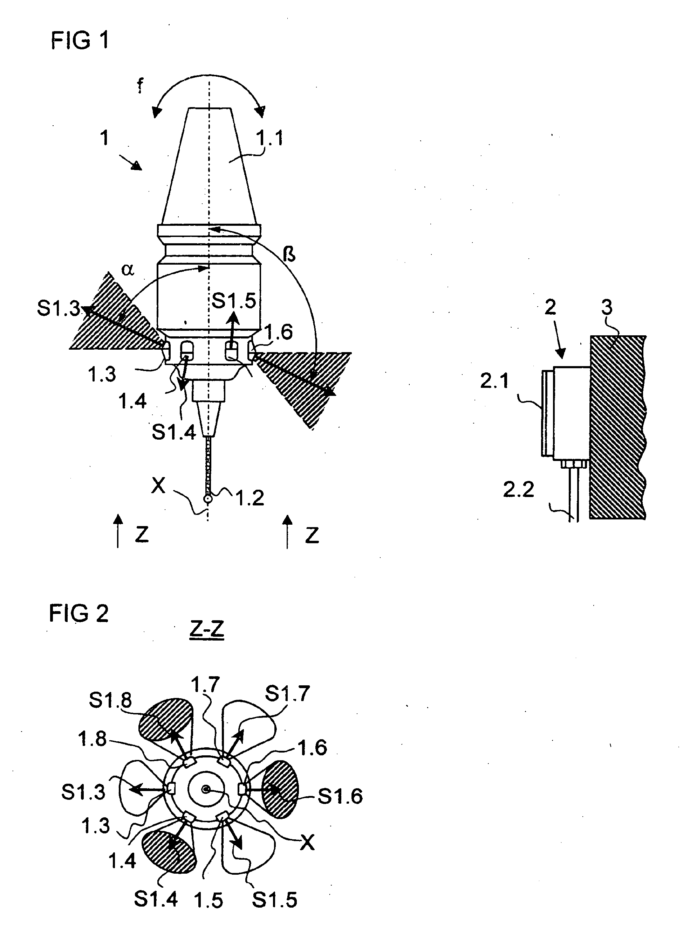

In der Figur 1 ist ein Tastkopf 1 gezeigt, der mittels eines Spannkonus 1.1 in eine Werkzeugmaschine eingespannt werden kann. Der Tastkopf 1 weist eine Längsachse X auf, welche gleichzeitig die Mittelachse des Spannkonus 1.1 ist. Im Messbetrieb wird der Tastkopf 1 innerhalb des Bearbeitungsraumes der Werkzeugmaschine verfahren oder, wie mit dem Pfeil f angedeutet, um eine Achse, die orthogonal zur Längsachse X ausgerichtet ist, geschwenkt. Für den Messzweck ist am Tastkopf 1 parallel und konzentrisch zu Längsachse X ein zylindrischer Taststift 1.2 vorgesehen, welcher an einem Ende eine Antastkugel aufweist. Sobald der Taststift 1.2 durch eine Berührung, beispielsweise mit einem zu vermessenden Werkstück, ausgelenkt wird, sendet der Tastkopf 1 ein entsprechendes Infrarot-Signal an ein stationäres Teil 2, welches an einem unbeweglichen Bauteil 3 der Werkzeugmaschine fixiert ist.

Das stationäre Teil 2 besteht unter anderem aus einem Infrarot durchlässigen Fenster 2.1. Im Inneren des stationären Teils 2 werden die Infrarot-Signale in elektrische Signale umgewandelt und aufbereitet. Letztlich gelangen die aufbereiteten elektrischen Signale über ein Kabel 2.2 in eine ortsfeste Folgeelektronik, wo sie weiterverarbeitet werden.

Das Aussenden eines Infrarot-Signals vom Tastkopf 1 erfolgt mit Hilfe von Sendelementen 1.3, 1.4, 1.5, 1.6, 1.7, 1.8 welche, wie in den Figuren 1 und 2 dargestellt, über den Umfang des Tastkopfes 1 versetzt angeordnet sind. Im gezeigten Beispiel sind am Tastkopf 1 sechs Sendelemente 1.3, 1.4, 1.5, 1.6, 1.7, 1.8 vorgesehen, die jeweils um 60° entlang einer Umfangslinie am Tastkopf 1 versetzt befestigt sind.

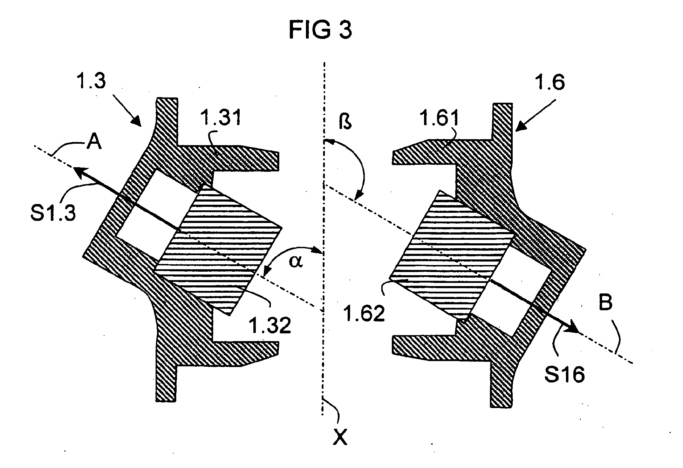

In der Figur 3 sind exemplarisch zwei Sendelemente 1.3, 1.4 detaillierter gezeigt. Gemäß der Figur 3 besteht demnach jedes der Sendelemente 1.3, 1.4, 1.5, 1.6, 1.7, 1.8 aus einem Gehäuse 1.31, 1.61, hier aus Kunststoff, und einer Lichtquelle in Form einer Leuchtdiode 1.32, 1.62.

Beim Aussenden eines Infrarot-Signals emittieren die Leuchtdioden 1.32, 1.62 entsprechend den Achsen A, B, bzw. den Abstrahlwinkeln α, β gerichtetes Infrarot-Licht. Der Abstrahlwinkel α, β kann, wie in den Figuren 1 und 3 dargestellt, als der Winkel zwischen einem Kernstrahl S1.3, S1.4, S1.5, S1.6, S1.7, S1.8 und der Längsachse X des Tastkopfes 1 definiert werden. Das Infrarot-Licht breitet sich im Raum kegelförmig aus, wobei der Öffnungswinkel des Lichtkegels im Wesentlichen durch die Geometrie des Gehäuses 1.31, 1.61 bestimmt wird. Im Zentrum des Lichtkegels befindet sich jeweils ein Kernstrahl S1.3, S1.4, S1.5, S1.6, S1.7, S1.8, der gleichzeitig den Bereich innerhalb eines Querschnittes durch den Lichtkegel festlegt, wo die maximale Strahlungsenergie erreicht wird.

Gemäß der Figur 1 sind die Sendelemente 1.3, 1.4, 1.5, 1.6, 1.7, 1.8 nunmehr so angeordnet, dass die Kernstrahlen S1.3, S1.4, S1.5, S1.6, S1.7, S1.8 nicht orthogonal zur Längsachse X emittiert werden, sondern schräg dazu, so dass sie eine Richtungskomponente parallel zur Längsachse X des Tastkopfes 1 aufweisen. Ferner sind jeweils zwei zueinander benachbarte Sendelemente 1.3, 1.4, 1.5, 1.6, 1.7, 1.8 um 180° relativ zueinander gedreht eingebaut. Auf diese Weise wird erreicht, dass der Abstrahlwinkel α, β der Kernstrahlen S1.3, S1.4, S1.5, S1.6, S1.7, S1.8 zweier benachbarter Sendeelemente 1.3, 1.4, 1.5, 1.6, 1.7, 1.8 unterschiedlich ist. Im vorgestellten Ausführungsbeispiel beträgt der Abstrahlwinkel α des Sendeelements 1.3 60°, während der Abstrahlwinkel β des dazu benachbarten Sendeelements 1.4 120° beträgt. Somit beträgt die Summe der Abstrahlwinkel α, β der Kernstrahlen S1.3, S1.4, S1.5, S1.6, S1.7, S1.8 zweier benachbarter Sendeelemente 1.3, 1.4, 1.5, 1.6, 1.7, 1.8 180°. Diese Betrachtung gilt im gezeigten Ausführungsbeispiel für alle zueinander benachbarten Sendeelemente 1.3, 1.4, 1.5, 1.6, 1.7, 1.8. Mit zueinander benachbarten Sendeelementen 1.3, 1.4, 1.5, 1.6, 1.7, 1.8 sind also Bauteile gemeint, die unmittelbar nebeneinander angeordnet sind. Dadurch, dass der jeweilige Abstrahlwinkel α, β der Kernstrahlen S1.3, S1.4, S1.5, S1.6, S1.7, S1.8 durch die Einbaulage der Sendeelemente 1.3, 1.4, 1.5, 1.6, 1.7, 1.8 vorgegeben wird und dadurch, dass im gezeigten Beispiel konstruktiv zwei verschiedene Einbaulagen möglich sind, können folglich nur zwei unterschiedliche Abstrahlwinkel α, β realisiert werden. Aus diesem Zusammenhang folgt, dass zwei nicht benachbarte Sendeelemente 1.3, 1.4, 1.5, 1.6, 1.7, 1.8 Kemstrahlen S1.3, S1.4, S1.5, S1.6, S1.7, S1.8 mit gleichem Abstrahlwinkel α, β aufweisen.

Durch die Verwendung von ausschließlich baugleichen Sendeelementen 1.3, 1.4, 1.5, 1.6, 1.7, 1.8 ist die Lagerhaltung der Einzelteile, die Montage und die Herstellung insgesamt überaus kostengünstig.

In der Figur 2 ist eine Ansicht von unten auf den Tastkopf 1 gezeigt. Die Kernstrahlen S1.4, S1.6, S1.8 der nicht-benachbarten Sendeelemente 1.4, 1.6, 1.8 sind demnach aus der Zeichenebene heraus gerichtet, während die übrigen Kernstrahlen S1.3, S1.5, S1.7 in die Zeichenebene hinein zeigen. Diese Anordnung soll durch die unterschiedliche Darstellung der Lichtkegel veranschaulicht werden.

Wie bereits erwähnt sind die sechs Sendelemente 1.3, 1.4, 1.5, 1.6, 1.7, 1.8 entlang einer Umfangslinie mit einem Teilungsmaß von 60° gegeneinander versetzt angeordnet. Die Kernstrahlen S1.3, S1.4, S1.5, S1.6, S1.7, S1.8 sind bezüglich der Längsachse X des Tastkopfes 1 um die Abstrahlwinkel α, β geneigt nach außen gerichtet, so dass zwei der Kernstrahlen S1.3, S1.6 in ein und derselben geometrischen Ebene liegen (in der Figur 1 ist dies gleichzeitig die Zeichenebene) , wobei in dieser Ebene auch die Längsachse X zu liegen kommt. Auf diese Weise wird eine im gesamten Messraum gute und gleichmäßige Signalübertragung ermöglich, wobei im gezeigten Ausführungsbeispiel lediglich ein stationäres Teil 2 als Empfänger notwendig ist und, wie bereits erwähnt, nur ein Typ von Sendeelementen 1.3, 1.4, 1.5, 1.6, 1.7, 1.8 bereitgestellt werden muss, und die Abstrahlwinkel α, β lediglich durch unterschiedliche Einbaulagen vorgegeben werden.

Im übrigen kann aber das stationäre Teil 2 auch Infrarot-Signale an den Tastkopf 1 senden. Bei einer Übertragung in dieser Richtung werden die Infrarot-Signale von in die Sendelemente 1.3, 1.4, 1.5, 1.6, 1.7, 1.8 integrierte Empfängermodule empfangen. Auch hier hat die Anordnung mit unterschiedlichen Abstrahlwinkeln α, β, hier also als Empfängerwinkel funktionierend, Vorteile.

## Patentansprüche

1. Tastkopf (1) mit einem auslenkbaren Taststift (1.2), wobei bei einer Auslenkung des Taststifts (1.2) aus seiner Ruheposition ein Schaltsignal abgebbar ist und mittels eines geeigneten Wandlers ein elektrisches Signal erzeugbar ist, wenn die Auslenkung eine vorgegebene Tastschwelle überschreitet, wobei das elektrische Signal in ein Infrarot-Signal umwandelbar ist zur berührungs- und kabellosen Signalübertragung und der Tastkopf (1) zum Aussenden des Infrarot-Signals mehrere Sendeelemente (1.3, 1.4, 1.5, 1.6, 1.7, 1.8) aufweist, welche über den Umfang des Tastkopfes (1) versetzt angeordnet sind, wobei von den Sendeelementen (1.3, 1.4, 1.5, 1.6, 1.7, 1.8) jeweils gerichtetes Infrarot-Licht mit einem Kernstrahl (S1.3, S1.4, S1.5, S1.6, S1.7, S1.8), der eine Richtungskomponente parallel zur Längsachse (X) des Tastkopfes (1) aufweist, emittierbar ist,
**dadurch gekennzeichnet, dass** die Kernstrahlen (S1.3, S1.4; S1.5, S1.6; S1.7, S1.8)
- von zwei zueinander benachbarten Sendeelementen (1.3, 1.4; 1.5, 1.6; 1.7, 1.8) bezüglich der Längsachse (X) unterschiedliche Abstrahlwinkel (α; β), und
- von zwei nicht unmittelbar benachbarten Sendeelementen (1.3, 1.5; 1.4, 1.6; 1.7, 1.8) bezüglich der Längsachse (X) gleiche Abstrahlwinkel (α; β) aufweisen.

2. Tastkopf (1) gemäß dem Anspruch 1, **dadurch gekennzeichnet, dass** der Abstrahlwinkel (α, β) der Kernstrahlen (S1.3, S1.4, S1.5, S1.6, S1.7, S1.8) durch die Einbaulage der Sendeelemente (1.3, 1.4, 1.5, 1.6, 1.7, 1.8) vorgebbar ist.

3. Tastkopf (1) gemäß einem der vorhergehenden Ansprüche, **dadurch gekennzeichnet, dass** sich die beiden bezüglich der Längsachse (X) unterschiedlichen Abstrahlwinkel (α; β) der Kernstrahlen (S1.3, S1.4, S1.5, S1.6, S1.7, S1.8) von zwei zueinander benachbarten Sendeelementen (1.3, 1.4, 1.5, 1.6, 1.7, 1.8) zu 180° addieren.

4. Tastkopf (1) gemäß einem der vorhergehenden Ansprüche, **dadurch gekennzeichnet, dass** zumindest zwei der Kernstrahlen (S1.3, S1.6; S1.4, S1.7; S1.5, S1.8) in ein und derselben geometrischen Ebene liegen.

5. Tastkopf (1) gemäß einem der vorhergehenden Ansprüche, **dadurch gekennzeichnet, dass** zumindest zwei der Kernstrahlen (S1.3, S1.6; S1.4, S1.7; S1.5, S1.8) und die Längsachse (X) in ein und derselben geometrischen Ebene liegen.

6. Tastkopf (1) gemäß einem der vorhergehenden Ansprüche, **dadurch gekennzeichnet, dass** mindestens vier, insbesondere mindestens sechs. Sendeelemente (1.3, 1.4, 1.5, 1.6, 1.7, 1.8) über den Umfang des Tastkopfes (1) versetzt angeordnet sind.

## Claims

1. A probe (1) comprising a movable stylus (1.2), wherein a switch signal can be output in response to a movement of the stylus (1.2) out of its rest position and an electric signal can be generated by means of a suitable transformer in the event that the movement exceeds a predetermined probing threshold, wherein the electric signal can be converted into an infrared signal for the contact-free and cable-free signal transmission and the probe (1) encompasses a plurality of transmission elements (1.3, 1.4, 1.5, 1.6, 1.7, 1.8), which are staggered across the periphery of the probe (1), for emitting the infrared signal, wherein aligned infrared light comprising a core ray (S1.3, S1.4, S1.5, S1.6, S1.7, S1.8), which encompasses a directional component parallel to the longitudinal axis (X) of the probe (1) can be emitted in each case by the transmission elements (1.3, 1.4, 1.5, 1.6, 1.7, 1.8),
**characterized in that** the core rays (S1.3, S1.4, S1.5, S1.6, S1.7, S1.8)
- of two adjacent transmission elements (1.3, 1.4, 1.5, 1.6, 1.7, 1.8) encompass emission angles (α, β), which are different with reference to the longitudinal axis (X) and
- of two transmission elements (1.3, 1.4, 1.5, 1.6, 1.7, 1.8), which are not directly adjacent, encompass emission angles (α, β), which are the same with reference to the longitudinal axis (X).

2. The probe (1) according to claim 1, **characterized in that** the emission angle (α, β) of the core rays (S1.3, S1.4, S1.5, S1.6, S1.7, S1.8) can be predetermined by means of the mounting position of the transmission elements (1.3, 1.4, 1.5, 1.6, 1.7, 1.8).

3. The probe (1) according to one of the preceding claims, **characterized in that** the two emission angles (α, β), which differ from one another with reference to the longitudinal axis (X), of the core rays (S1.3, S1.4, S1.5, S1.6, S1.7, S1.8) of two adjacent transmission elements (1.3, 1.4, 1.5, 1.6, 1.7, 1.8) add to 180°.

4. The probe (1) according to one of the preceding claims, **characterized in that** at least two of the core rays (S1.3, S1.4, S1.5, S1.6, S1.7, S1.8) lie in one and the same geometric plane.

5. The probe (1) according to one of the preceding claims, **characterized in that** at least two of the core rays (S1.3, S1.4, S1.5, S1.6, S1.7, S1.8) and the longitudinal axis (X) lie in one and the same geometric plane.

6. The probe (1) according to one of the preceding claims, **characterized in that** at least four, in particular at least six transmission elements (1.3., 1.4, 1.5, 1.6, 1.7, 1.8) are staggered across the periphery of the probe (1).

## Revendications

1. Sonde (1) avec une broche de détection (1.2) apte à être déviée, dans laquelle, lors d'une déviation de la broche de détection (1.2) hors de sa position de repos, un signal de commutation peut être envoyé et un signal électrique peut être produit au moyen d'un convertisseur approprié, lorsque la déviation dépasse un certain seuil de détection, le signal électrique pouvant être converti en un signal infrarouge pour une transmission de signal sans contact et sans fil, et la sonde (1) comporte plusieurs éléments émetteurs (1.3, 1.4, 1.5, 1.6, 1.7, 1.8) pour l'émission du signal infrarouge, disposés de façon décalée sur le pourtour de la sonde (1), les éléments émetteurs (1.3, 1.4, 1.5, 1.6, 1.7, 1.8) pouvant émettre une lumière infrarouge dirigée, avec un faisceau central (S1.3, S1.4, S1.5, S1.6, S1.7, S1.8) comportant une composante de direction parallèlement à l'axe longitudinal (X) de la sonde (1),
**caractérisée en ce que** les faisceaux centraux (S1.3, S1.4, S1.5, S1.6, S1.7, S1.8)
- présentent des angles de départ différents (α ; β) par rapport à l'axe longitudinal (X), à partir de deux éléments émetteurs (1.3, 1.4, 1.5, 1.6, 1.7, 1.8) voisins, et
- présentent des angles de départ identiques (α ; β) par rapport à l'axe longitudinal (X), à partir de deux faisceau central (S1.3, S1.4, S1.5, S1.6, S1.7, S1.8) pas immédiatement voisins.

2. Sonde (1) selon la revendication 1, **caractérisée en ce que** l'angle de départ (α ; β) des faisceaux centraux (S1.3, S1.4, S1.5, S1.6, S1.7, S1.8) peut être prédéfini par la position de montage des éléments émetteurs (1.3, 1.4, 1.5, 1.6, 1.7, 1.8).

3. Sonde (1) selon l'une des revendications précédentes, **caractérisée en ce que** la somme des deux angles de départ (α ; β) différents par rapport à l'axe longitudinal (X) des faisceaux centraux (S1.3, S1.4, S1.5, S1.6, S1.7, S1.8) de deux éléments émetteurs (1.3, 1.4, 1.5, 1.6, 1.7, 1.8) voisins est égale à 180°.

4. Sonde (1) selon l'une des revendications précédentes, **caractérisée en ce qu'**au moins deux des faisceaux centraux (S1.3, S1.4, S1.5, S1.6, S1.7, S1.8) se trouvent dans un seul et même plan géométrique.

5. Sonde (1) selon l'une des revendications précédentes, **caractérisée en ce qu'**au moins deux des faisceaux centraux (S1.3, S1.4, S1.5, S1.6, S1.7, S1.8) et l'axe longitudinal (X) se trouvent dans un seul et même plan géométrique.

6. Sonde (1) selon l'une des revendications précédentes, **caractérisée en ce qu'**au moins quatre, en particulier au moins six éléments émetteurs (1.3, 1.4, 1.5, 1.6, 1.7, 1.8) sont disposés de façon décalée sur le pourtour de la sonde (1).
